# EUROPEAN PATENT APPLICATION

(11) **EP 4 821 767 A1**
(43) Date of publication of application: **14.10.2026**
(21) Application number: 25382359.5
(22) Date of filing: 08.04.2025
(51) Int. Cl.: B60R 13/00

(54) **RELEASABLE VEHICLE COMPONENT ASSEMBLY FOR MOTOR VEHICLES**

(71) Applicant: Ficosa Automotive, S.L.U., 08232 Viladecavalls (ES)
(72) Inventor: RUIZ ORTEGA, Nestor, 08232 VILADECAVALLS (ES); FLIX PRATS, Jaume, 08232 VILADECAVALLS (ES); ALCALÁ BLANCO, Carlos, 08232 VILADECAVALLS (ES)
(74) Representative: ZBM Patents - Zea, Barlocci & Markvardsen

(57) **Abstract**

The releasable vehicle component assembly (100) comprises a vehicle component (110), a mounting support (120) having a receiving body (130) and configured to be fixedly attached to or made integral with a part (200) of a vehicle, and a retaining mechanism (140) for releasably retaining the vehicle component (110) to the mounting support (120). The vehicle component (110) is releasably retained to the mounting support (120) upon a combination of a first displacement (d1) of the vehicle component (110) towards or away from the mounting support (120) and a second displacement (d2) of the vehicle component (110) over the mounting support (120).

## Description

### Technical field

The present disclosure relates to vehicle components and, more particularly, to component assemblies for motor vehicles, for example, in the form of aesthetic components, such as badges, logos, emblems, or in the form of functional components, such as lighting, signaling, sensor devices, etc. Such vehicle components are intended to be mounted on a vehicle part such as the hood, the trunk, the vehicle panel, or the grille of a motor vehicle.

### BACKGROUND

Vehicle components such as badges, logos, symbols, emblems, etc. which are typically provided on the front of a vehicle, for example on the vehicle hood or grille, are in many cases three-dimensional elements that may project out from the vehicle, such as for example with the purpose of highlighting the vehicle brand, to be distinguished from other vehicles.

Such components are exposed to the outside of the vehicle and therefore they are prone to damages due to accidental collisions or wear, or due to normal use, outdoor environmental conditions such as wind and rain, etc. Furthermore, the vehicle components are easy to be stolen resulting in the outer appearance of the vehicle being affected.

In an attempt to overcome the above disadvantages, a number of approaches have been proposed in the art. For example, vehicle components have been provided having an anti-theft feature such as disclosed, for example, in CN117183934A. In this document a vehicle emblem assembly is provided such that, when it is touched, a base assembly is moved triggering a device to perform an anti-theft action. Such vehicle component is complex and also difficult to be removed for repair operations.

Further approaches have been also proposed in the art such as the detachable ornament for an automobile hood disclosed in US4913941 which is mounted to a shaft that is biased by a spring. The shaft is intended to be received into a receptable formed in the vehicle hood having a transverse slot for receiving a key member of the shaft. The spring is compressed as the shaft is pressed and the shaft key member is inserted through the ledge opening. Once inserted, the hood ornament is rotated to become locked into place. Said approach is however directed to ornaments that can be easily removed from the vehicle and stored, and it does not deal with antitheft security.

It is therefore an object of the invention to provide an efficient releasable vehicle component assembly for motor vehicles which is easy to be assembled to and disassembled from a vehicle while being also well suited for securing against theft.

### SUMMARY

A releasable vehicle component assembly for motor vehicles is provided herein. The component assembly comprises a vehicle component.

Throughout the present disclosure, a vehicle component refers herein to aesthetic components such as badges, logos, emblems, etc., and also to any other functional component such as lighting, signaling, or sensor devices.

The component assembly further comprises a mounting support. The mounting support has a receiving body. The receiving body is configured for receiving therein an actuator that will be described further below.

The mounting support is configured to be fixedly attached to or made integral with a part of a vehicle. A part of a vehicle may refer herein to a hood or a grille of a vehicle, or any other suitable part provided elsewhere in a vehicle.

The vehicle component is releasably retained to the mounting support upon a relative movement therebetween. To this effect, a retaining mechanism is provided for releasably retaining the vehicle component to the mounting support.

The above-mentioned relative movement of the vehicle component and the mounting support preferably comprises a combination of at least a first displacement and a second displacement of the vehicle component relative to the mounting support.

The first displacement of the vehicle component corresponds to a movement along a direction towards or away from the mounting support. The second displacement of the vehicle component corresponds to a movement over the mounting support.

It is to be noted that said first and second displacements refer herein to movements in two different directions. For example, when the present releasable vehicle component assembly is to be assembled to the vehicle, the vehicle component may be first moved towards the mounting support, that is, according to the first displacement, and then the vehicle component is moved over the mounting support, such as for example laterally along a first direction, that is, according to the second displacement. In the same way, when the present releasable vehicle component assembly is to be disassembled from the vehicle, the vehicle component may be first moved over the mounting support, laterally along a second, opposite direction and then the vehicle component moved away from the mounting support.

The retaining mechanism may include the above-mentioned actuator. Such actuator is intended for retaining the vehicle component to the mounting support and for releasing the vehicle component from the mounting support as desired.

The actuator is configured for sliding along the receiving body of the mounting support, and for rotating within the receiving body around a longitudinal axis of the actuator.

The actuator has a locking end for interacting with the vehicle component. Furthermore, the actuator has an actuating end to be actuated by a user from a vehicle interior for selectively allowing or preventing said relative movement of the vehicle component and the mounting support for retaining to and releasing from one another. In one non-limiting example, the actuator may be formed with a stem having said operating end and said actuating end. The stem is intended to slide within the receiving body of the mounting support.

The mounting support has a first side facing the vehicle exterior. The first side of the mounting support is intended for receiving the vehicle component. The mounting support has a second side facing the vehicle interior. The second side of the mounting support is intended for providing access to the actuating end or for attachment to a vehicle part. The actuating end of the actuator is thus arranged to be operated from an interior of the vehicle, for example, from the interior of a hood of a vehicle.

The mounting support may include attaching means for permanent attachment of the mounting support to the part of the vehicle. Said attaching means may be, for example, a one-way quick coupling, although other types of attaching means may be used. The attaching means are preferably intended for attachment in one single direction and are intended to lock the mounting support to the vehicle in all directions when assembled. It may be envisaged that the mounting support is formed integrally with any part of the vehicle.

The vehicle component may have at least one vehicle component engaging element, and the mounting support have at least one mounting support engaging element. The vehicle component engaging element is intended for cooperating with a corresponding one of said at least one mounting support engaging element for releasable retention between them.

As described above, the actuator has a locking end. The locking end is intended to abut an abutting member formed in the vehicle component, in one specific angular position of the locking end of the actuator within the receiving body, for preventing the second displacement of the vehicle component which, as stated above, corresponds to a movement over the mounting support such as along a lateral direction when viewed from the vehicle front.

The receiving body may have at least a mounting support engaging element for engaging a vehicle component engaging element arranged for cooperating with the mounting support engaging element for releasable retention of the vehicle component and the mounting support, as stated above. Preferably, this mounting support engaging element defines a first opening for receiving the vehicle component engaging element.

The receiving body formed in the mounting support may include a locking wall. The locking wall may have a second opening formed therein. Said second opening may be configured such that the locking end of the actuator is allowed to pass through in one specific angular position of the locking end of the actuator.

The mounting support may include a third opening, The third opening, if provided, is configured for the passage of at least one electric cable, data cable, etc. therethrough. A number of third openings may be formed in the mounting support where required for the passage of electric cables or any other elements as required.

A first side of the locking wall of the receiving body may be provided with at least one first rotation restraining member. For its part, the actuator may preferably include a locking wing. The locking wing is intended for abutting said at least one first rotation restraining member of the receiving body locking wall. Abutment of the locking wing against the first rotation restraining member results in a rotational movement of the actuator being restrained within the receiving body.

In one example, said first side of the locking wall corresponds to a surface thereof facing the interior of the vehicle, and said second side of the locking wall corresponds to a surface thereof facing the exterior of the vehicle.

The second side of the locking wall of the receiving body may be provided with at least one second rotation restraining member. Such second rotation restraining member is intended to abut the locking end of the actuator for restraining a rotational movement within the receiving body.

Biasing means are preferably provided for biasing the actuator against a sliding movement within the receiving body. Said biasing means may comprise, for example, a compression spring arranged surrounding the stem of the actuator abutting both the actuating end of the actuator and the first side of the locking wall of the receiving body facing the interior of the vehicle. Other types of biasing means may of course be provided, such as any suitable elastic or resilient member, for example, a foam, a rubber block, etc.

The vehicle component may include a volume defined by a restraining surface. The restraining surface is arranged for restraining a movement of the actuator along the receiving body such that the locking end of the actuator is prevented to pass through the second rotation restraining member.

Thus, the above mentioned first displacement is restrained by the interaction between the vehicle component engaging element and the mounting support engaging element once the second displacement has been performed.

In some examples, the releasable vehicle component assembly may further include a housing. The housing may be attached to or formed integral with the vehicle component. On the other hand, the housing is configured to be releasably retained to the mounting support upon a relative displacement therebetween. At least one of the abutting members and the vehicle component engaging element may be formed in said housing.

Assembling of the releasable vehicle component assembly to a part of a vehicle is performed by first mounting the retaining mechanism. This consists in pushing the actuating end of the actuator causing the stem thereof to slide within the receiving body against the action of the biasing means until the locking end of the actuator is passed through the second opening of the locking wall in the receiving body beyond the second side of the locking wall.

Once the second rotation restraining members have been overcome by the locking end of the actuator, the actuator is then rotated a determined angle until an unlock condition is reached. After the actuator is rotated by said determined angle, the actuator is no longer pushed such that the locking end of the actuator is prevented from passing again through the locking wall and has a position that allows the vehicle component to be assembled across the first displacement direction.

The assembly of the releasable vehicle component assembly from the vehicle is performed by moving the vehicle component towards the mounting support, approaching it according to the first displacement and moving over the mounting support according to the second displacement, causing the vehicle component engaging elements to engage the corresponding mounting support engaging elements. In this unlock condition, the vehicle component is prevented from being moved according to the first displacement and thus from being removed from the mounting support.

The retaining mechanism is then operated for bringing the vehicle component into a locked condition in which it is prevented from being moved according to the second displacement. The actuating end of the actuator is then rotated causing the stem thereof to be also rotated such that the locking end of the actuator is arranged abutting the abutting member of the vehicle component reaching the locked condition.

In said locked condition, the vehicle component is prevented from being moved along a second, opposite lateral direction according to the second displacement, such that the vehicle component cannot be moved according to any of the first and second displacements and thus such that it cannot be removed from the mounting support.

Disassembling of the releasable vehicle component assembly from the vehicle, and thus passing from the lock condition to the unlock condition, is performed in the opposite manner as follows, by first accessing the interior of the vehicle for reaching the retaining mechanism and for rotating the actuating end of the actuator such that the locking end of the actuator is arranged not abutting the abutting member of the vehicle component.

An unlocked condition is then reached in which the abutting member, and thus the vehicle component, is allowed to move with respect to the mounting support according to the second displacement and then according to the first displacement. In said unlocked condition, the vehicle component is allowed to move according to the second displacement until the vehicle component engaging elements are disengaged from the mounting support engaging elements resulting in the vehicle component being allowed to move according to the first displacement so that it can be then moved away from the mounting support.

The above-mentioned assembling or disassembling operations may be performed either with the vehicle component being first assembled to the mounting support and then assembling both to the part of the vehicle, or with the mounting support being first assembled to the part of the vehicle and then assembling the vehicle component to the mounting support.

A releasable vehicle component assembly as described above is intended to be assembled to an exterior part of a vehicle, such as the hood, the front grille, etc. and, once it has been assembled, it can be released therefrom by being actuated from the interior of the vehicle. The assembling and disassembling operations are extremely quick, easy, and safe. The present releasable vehicle component assembly is markedly advantageous when the vehicle component should be disassembled for repair purposes. With the present releasable vehicle component assembly, there is no need to break off a part of a vehicle where the vehicle component is to be attached, such as the hood or the grille of the vehicle. Disassembling the vehicle component from the vehicle can be carried out without the vehicle component being damaged or broken off.

### BRIEF DESCRIPTION OF THE DRAWINGS

Non-limiting examples of the present disclosure will be described in the following, with reference to the appended drawings.

In the drawings:
Figure 1 is an exploded view of one example of the mounting support of the releasable vehicle component assembly, showing the retaining mechanism;
Figure 2 is a front perspective view of the releasable vehicle component assembly;
Figure 3 is a rear perspective view of the vehicle component attached to the mounting support;
Figure 4 is a side perspective view of the vehicle component attached to the mounting support;
Figure 5 is a rear elevational view of the vehicle component;
Figure 6 is a rear elevational view of the mounting support;
Figure 7 is a fragmentary perspective front view of the mounting support, showing a portion of the retaining mechanism;
Figure 8 is an enlarged detail view of figure 7, without the retaining mechanism;
Figure 9 is an enlarged detail view of figure 7 showing the actuator inserted therein and positioned in a locking position;
Figure 10 is a fragmentary perspective view of a rear portion of the vehicle component corresponding to the retaining mechanism in a locked condition, showing the actuator in detail without the mounting support;
Figure 11 is an enlarged fragmentary perspective view of the vehicle component attached to the mounting support, showing the corresponding engaging elements in a locked condition;
Figure 12 is a fragmentary perspective sectional view of receiving body of the mounting support into which the actuator is inserted;
Figure 13 is a fragmentary perspective view of a vehicle grille showing the vehicle component attached to the mounting support and both disassembled from the vehicle grille; and
Figure 14 is another fragmentary perspective view of the vehicle grille shown in figure 13 where the mounting support has been already attached to the vehicle grille and with the vehicle component disassembled from the mounting support.

### DETAILED DESCRIPTION OF EXAMPLES

In the non-limiting examples illustrated in the figures of the drawings, the present releasable vehicle component assembly has been denoted as a whole with reference numeral 100.

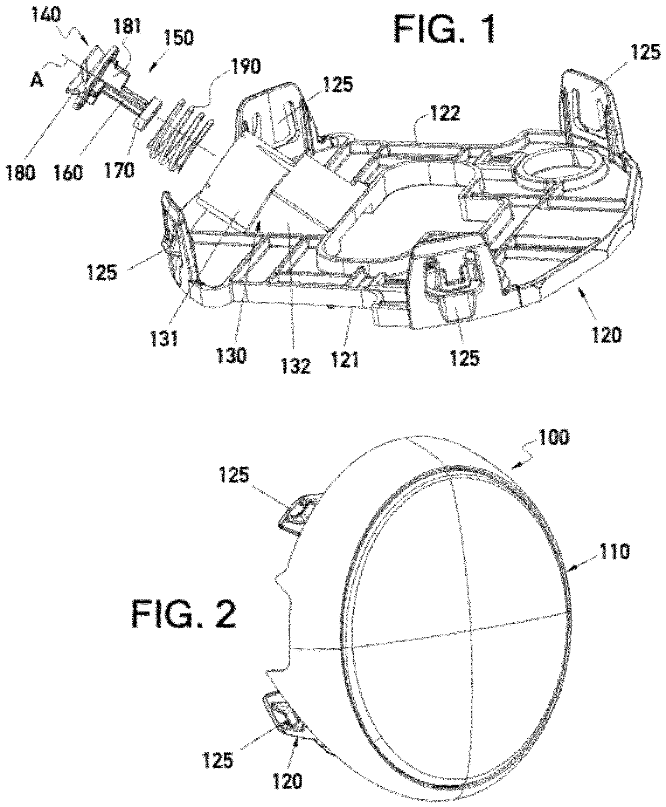

**The** releasable vehicle component assembly 100 comprises a vehicle component 110 and a mounting support 120. **The** vehicle component 110 is shown in detail in figures 2, 4, 5 and 10, while the mounting support 120 is shown in detail in figures 1, 6-9 and 12.

**The** vehicle component 110 is configured to be releasably retained to the mounting support 120. This is carried out through a retaining mechanism 140, shown in figures 1, 7, 9, 10 and 12 of the drawings, in combination with a relative movement between the vehicle component 110 and the mounting support 120, as it will be described in detail further below.

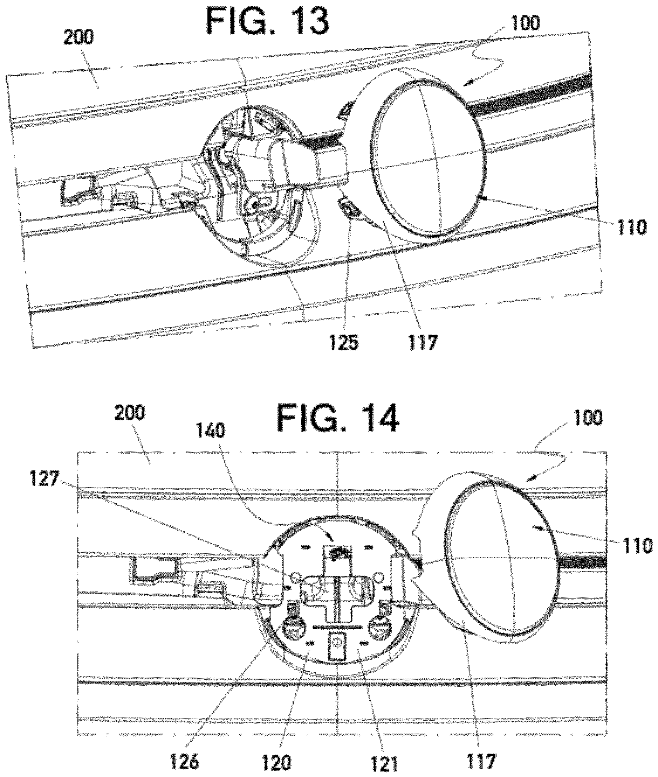

The mounting support 120 is intended to be attached to a part 200 of a vehicle. In the particular example shown in figures 13 and 14 of the drawings, the part of the vehicle is the front grille 200 of the vehicle. Other parts of a vehicle may be also envisaged to which the present releasable vehicle component assembly 100 may be mounted.

In the specific examples illustrated in the figures, the mounting support 120 is an independent component, separated from the front grille 200 of the vehicle. However, the mounting support 120 may be integrally formed with the front grille 200 of the vehicle. In the case in which the mounting support 120 is an independent component, separated from the front grille 200, the mounting support 120 is configured to be permanently attached to front grille 200 of the vehicle once attached thereto. This is carried out through a suitable attaching means 125 configured for permanent attachment of the mounting support 120 to the front grille 200 of the vehicle. Examples of suitable attaching means 125 for permanent attachment of the mounting support 120 to the front grille 200 of the vehicle may be, for example, a one-way quick coupling.

The vehicle component 110 may be an aesthetic component, such as a badge, a logo, an emblem, or a functional component, such as a sensor device, a lighting device, a signaling device, or a combination thereof.

As shown in figures 1, 3, 6 and 12 of the drawings, the mounting support 120 has a receiving body 130. The receiving body 130 has an interior configured for at least partially receiving therein an actuator 150. Said actuator 150 is part of the above-mentioned retaining mechanism 140.

The actuator 150 is intended for retaining the vehicle component 110 to the mounting support 120, such that they can be released from one another as desired. As shown in figure 1, the actuator 150 comprises a stem 160. The stem 160 of the actuator 150 has a locking end 170 and an opposite actuating end 180. The locking end 170 is intended for interacting with the vehicle component 110 as described hereinbelow. The actuating end 180 is intended to be actuated by a user, mechanic, operator, or technician from a vehicle interior, for example, from inside of a vehicle hood. Operating the actuator 150 through its actuating end 180 from a vehicle interior results in the above-mentioned relative movement of the vehicle component 110 and the mounting support 120 to be selectively allowed or prevented for releasing or retaining both elements correspondingly as required.

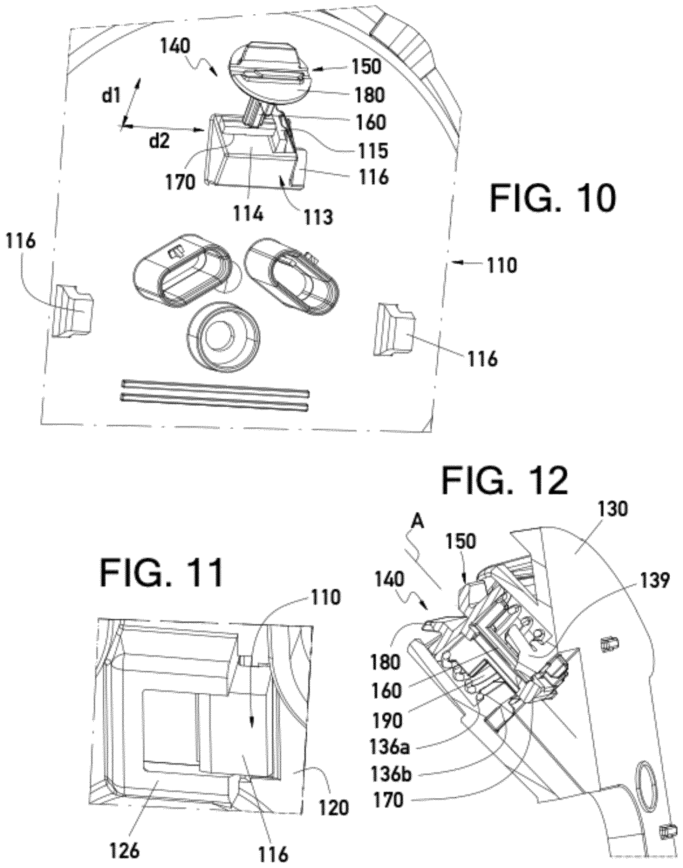

Reference is now made to figure 10. The above-mentioned relative movement of the vehicle component 110 and the mounting support 120 comprises a combination of a first displacement d1 of the vehicle component 110 along a direction towards or away from the mounting support 120, not shown in figure 10, and a second displacement d2 of the vehicle component 110 over the mounting support 120, not shown in figure 10. In the example shown, the second displacement d2 is a lateral movement of an abutting member 115 that is formed in the vehicle component 110, as it will be described herein below, towards and away from the locking end 170 of the stem 160 of the actuator 150.

As noted above, the actuator 150 of the retaining mechanism 140 is configured for sliding along the receiving body 130 of the mounting support 120. The receiving body 130 comprises a hollow cylindrical body 131 attached to a block element 132, as shown in in figure 1. Between the hollow cylindrical body 131 and the block element 132 an inner locking wall 136 is arranged having with a first side or interior surface 136a and a second side or exterior surface 136b as it will be described below.

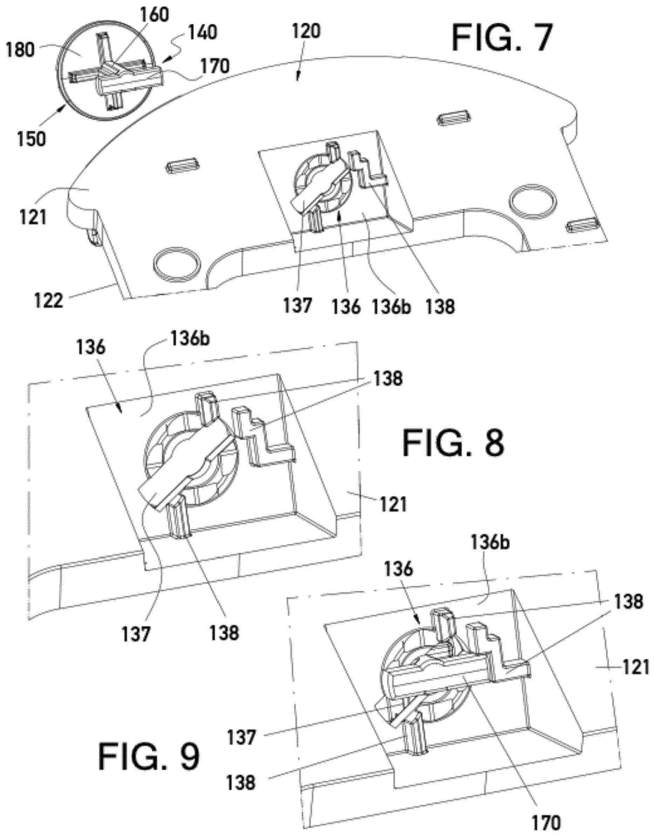

In particular, the stem 160 of the actuator 150 is allowed to slide along a longitudinal axis A of the receiving body 130, shown in figures 1 and 12, towards and away from a locking wall 136 that is formed within the receiving body 130 as it will be described herein below referring to figures 7, 8, and 9 of the drawings.

The actuator 150 is configured for rotating within the receiving body 130 of the mounting support 120, around a longitudinal axis of the stem 160 of the actuator 150, as shown in figure 1.

Referring to figure 7, the mounting support 120 has a first side 121 and an opposite, second side 122. The first side 121 of the mounting support 120 is arranged facing the vehicle exterior for receiving the vehicle component 110. The second side 122 of the mounting support 120 is arranged facing the vehicle interior for providing access to the actuating end 180 of the actuator 150. The receiving body 130 is formed on the second side 122 of the mounting support 120.

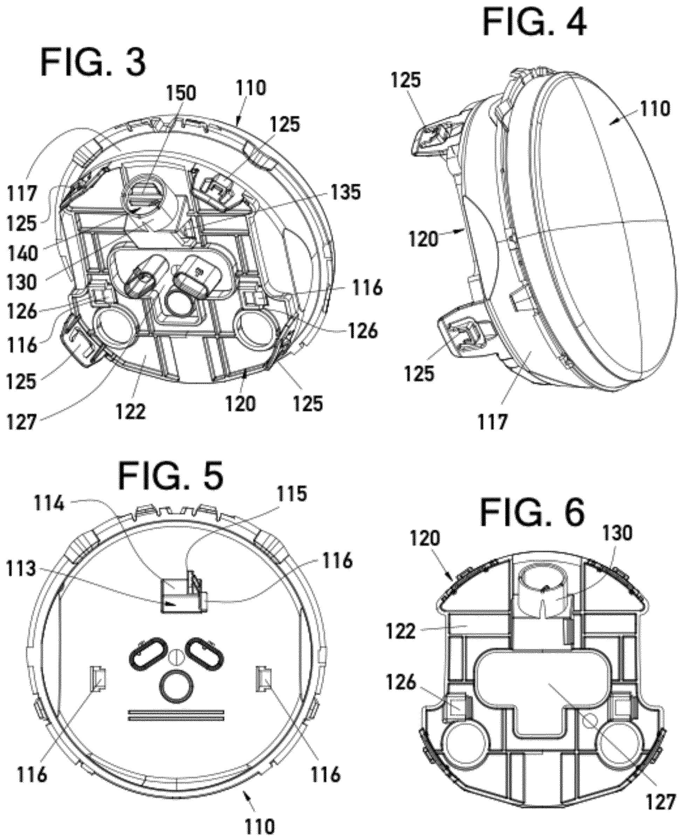

As shown in figures 3, 5, 6, and 11 of the drawings, the vehicle component 110 includes vehicle component engaging elements 116, and the mounting support 120 includes corresponding mounting support engaging elements 126. Said engaging elements 116, 126 are configured for releasably engaging one another. As a result, the vehicle component 110 can be releasably attached to the mounting support 120 as described above. A vehicle component engaging element 116 can be received into a first opening 135 that is formed in the receiving body 130, as shown in figure 3 of the drawings. The engaging elements 116, 126 may have opposite shapes.

Referring now to figures 7, 8, and 9, the receiving body 130 includes a locking wall 136. A second opening 137 is formed in said locking wall 136 that is configured such that the locking end 170 of the stem 160 of the actuator 150 is allowed to pass through, in one specific angular position thereof, when the stem 160 moves sliding within the receiving body 130 along a longitudinal axis A thereof, shown in figures 1 and 12.

A third opening 127 is formed in the mounting support 120. The third opening 127 is configured for the passage of cables therethrough, as shown in figures 3, 6, and 14 of the drawings. Said cables, not shown, may be electric cables or data cables, or both, and may be connected to the vehicle component 110.

The vehicle component 110 includes an abutting member 115, as stated above and as shown in figure 10 of the drawings, protruding from a back side of the vehicle component 110, facing the vehicle interior. The locking end 170 of the actuator 170 is intended to abut the abutting member 115 of the vehicle component 110 when said locking end 170 is positioned in one specific angular position within the receiving body 130, in a locked condition in which the second displacement d2 of the vehicle component 110 over mounting support 120 is prevented.

The locking wall 136 of the receiving body 130 has a first side 136a and a second, opposite side 136b, as shown in figure 12. Figures 7, 8, and 9 also show the second side 136b of the locking wall 136. The first side 136a of the locking wall 136 faces an interior of the vehicle while the second side 136b of the locking wall 136 faces an exterior of the vehicle.

A first rotation restraining member 139 is formed in the first side 136a of the locking wall 136 of the receiving body 130. The first rotation restraining member 139 is intended for restraining a rotational movement of the actuator 150 within the receiving body 130 along a longitudinal axis A thereof, shown in figures 1 and 12. For this purpose, the actuator 150 includes a locking wing 181, as shown in figure 1. The locking wing 181 is configured for abutting the first rotation restraining member 139 of the receiving body locking wall 136 resulting in a rotational movement of the actuator 150 within the receiving body 130 being restrained.

Referring again to figures 7, 8, and 9 of the drawings, a second rotation restraining member 138 is formed in the second side 136b of the locking wall 136 of the receiving body 130. The second rotation restraining member 138 is intended to abut the locking end 170 of the actuator 150, restraining a rotational movement of the actuator 150 within the receiving body 130.

The vehicle component 110 comprises a housing 117, as shown in figure 4. The housing 117 is configured to be releasably retained to the mounting support 120 upon a relative displacement therebetween. The housing 117 may be made integral with the vehicle component 110 such that the above-mentioned abutting member 115 and the vehicle component engaging element 116 are both formed in the housing 117.

The sliding movement of the actuator 150 along a longitudinal axis A of the receiving body 130, shown in figures 1 and 12, is performed against the action of biasing means 190, as shown in figure 1 of the drawings. In the non-limiting example shown in figure 1, the biasing means comprise a compression spring 190 although many other types of elastic or resilient members such as, for example, a foam element, a rubber block, etc. may be used to provide a spring action as the stem 160 of the actuator 150 slides within the receiving body 130. The compression spring 190 is arranged surrounding the stem 160 of the actuator 150 abutting both the actuating end 180 of the actuator 150 and the first side 136a of the locking wall 136 of the receiving body 130.

Referring now to figure 10 of the drawings, a restraining surface 114 is formed in the vehicle component 110. The restraining surface 114 defines a volume 113 therein. The restraining surface 114 is arranged for restraining a movement of the actuator 150 along the receiving body 130 such that the locking end 170 the actuator 150 is prevented to pass through the second rotation restraining member 138.

The second displacement d2 of the vehicle component 110 over the mounting support 120 is restrained, as described above, by the abutting member 115 of the vehicle component 110 that abuts the locking end 170 of the actuator 150.

Reference will now be made to figures 13 and 14 of the drawings for describing how the releasable vehicle component assembly 100 is assembled to and disassembled from a part 200 of a vehicle, in the particular example described, a front grille 200 of a vehicle.

Assembling of the releasable vehicle component assembly 100 to the front grille 200 of the vehicle, is performed as follows.

First, the actuating end 180 of the actuator 150 is pushed causing the stem 160 of the actuator 150 to slide within the receiving body 130 against the action of the compression spring 190 until the locking end 170 of the actuator 150 is passed through the second opening 137 of the locking wall 136 in the receiving body 130 beyond the second side 136b of the locking wall 136. Once the second rotation restraining members 138 have been overcome by the locking end 170 of the actuator 150, the actuator 150 is then rotated a determined angle until an unlock condition is reached. In this condition, the locking end 170 of the actuator 150 is prevented from passing again through the second opening 137 of the locking wall 136 with a rotation thereof.

Second, the vehicle component 110 is moved by a user, mechanic, operator, technician, etc. towards the mounting support 120 approaching it according to the first displacement d1. The vehicle component 110 is then moved over the mounting support 120, in particular, along a first lateral direction according to the second displacement d2, in this case, to the right in figure 10 of the drawings, causing the vehicle component engaging elements 116 to engage the corresponding mounting support engaging elements 126. Mutual engagement of engaging elements 116, 126 prevents the vehicle component 110 from being moved according to the first displacement d1 and thus from being removed from the mounting support 120.

The retaining mechanism 140 is then operated for bringing the vehicle component 110 into a locked condition in which it is prevented from being moved to the left in figure 10 of the drawings according to the second displacement d2. The actuating end 180 of the actuator 150 is then rotated, e.g. a quarter turn, causing the stem 160 of the actuator 150 to be also rotated such that the locking end 170 of the actuator is arranged abutting the abutting member 115 of the vehicle component 110 reaching the locked condition.

In this locked condition, the vehicle component 110 is prevented from being moved along a second, opposite lateral direction according to the second displacement d2, in this case, to the left in figure 10 of the drawings, as stated above. In this locked condition of the retaining mechanism 140, one portion of the abutting member 115 of the vehicle component 110 abuts the locking end 170 of the actuator 150 and the vehicle component engaging element 116 engages the first opening 135. As a result, the vehicle component 110 is locked in position such that it cannot be moved according to any of the first and second displacements d1, d2 and thus such that it cannot be removed from the mounting support 120.

Disassembling of the releasable vehicle component assembly 100 from the front grille 200 of the vehicle, for example for repair purposes when the vehicle component 110 is broken or damaged, is performed in the opposite manner as follows.

The interior of the vehicle, in this example, the interior of the vehicle hood, is accessed by a user, mechanic, operator, technician, etc., for reaching the retaining mechanism 140. The actuating end 180 of the actuator 150 is then operated by being rotated, e.g. a quarter turn, so that the stem 160 of the actuator 150 is also rotated such that the locking end 170 of the actuator 150 is arranged not abutting the abutting member 115 of the vehicle component 110. An unlocked condition is reached in which the abutting member 115, and thus the vehicle component 110, is allowed to move with respect to the mounting support 120 according to the second displacement d2 and then according to the first displacement d1.

In this unlocked condition, the vehicle component 110 is allowed to move along said second lateral direction according to the second displacement d2, in this case, to the left in figure 10 of the drawings, until the vehicle component engaging elements 116 are disengaged from the mounting support engaging elements 126. Mutual disengagement of the engaging elements 116, 126 results in the vehicle component 110 being allowed to move according to the first displacement d1 so that the vehicle component 110 can be then moved away from the mounting support 120.

It is to be noted that assembling the releasable component assembly 100 to the front grille 200 of the vehicle may be performed in two different ways, as follows.

According to a first way of assembling the releasable component assembly 100 to the front grille 200 of the vehicle, as shown in figure 13 of the drawings, the vehicle component 110 is first assembled to the mounting support 120, such that the former is releasably retained to the latter. The mounting support 120 is then assembled to the front grille 200 of the vehicle, such that the former is permanently attached to the latter.

According to a second way of assembling the releasable component assembly 100 to the front grille 200 of the vehicle, as shown in figure 14 of the drawings, the mounting support 120 is first assembled to the front grille 200 of the vehicle such that the former is permanently attached to the latter. The vehicle component 110 is then assembled to the mounting support 120 such that the former is releasably retained to the latter.

Although a number of particular examples of a releasable vehicle component assembly for motor vehicles have been disclosed herein, other alternatives, modifications, uses and/or equivalents thereof are possible. Furthermore, all possible combinations of the described examples are also covered. Thus, the scope of the present disclosure should not be limited by particular examples but should be determined only by a fair reading of the claims that follow.

Reference signs related to drawings are placed in parentheses in a claim are solely for attempting to increase the intelligibility of the claim and shall not be construed as limiting the scope of the claim.

## Claims

1. Releasable vehicle component assembly (100) for motor vehicles, the releasable vehicle component assembly (100) comprising:
- a vehicle component (110);
- a mounting support (120) having a receiving body (130), wherein the mounting support (120) is configured to be fixedly attached to or made integral with a part (200) of a vehicle, and wherein the vehicle component (110) is releasably retained to the mounting support (120) upon a relative movement (d1, d2) therebetween; and
- a retaining mechanism (140) for releasably retaining the vehicle component (110) to the mounting support (120).

2. The assembly (100) of claim 1, wherein the relative movement (d1, d2) of the vehicle component (110) and the mounting support (120) comprises a combination of at least a first displacement (d1) of the vehicle component (110) along a direction towards or away from the mounting support (120), and a second displacement (d2) of the vehicle component (110) over the mounting support (120).

3. The assembly (100) of claim 1 or 2, wherein the retaining mechanism (140) includes an actuator (150) having a locking end (170) for interacting with the vehicle component (110), and an actuating end (180) to be actuated by a user from a vehicle interior for selectively allowing or preventing said relative movement (d1, d2) of the vehicle component (110) and the mounting support (120) for retaining to and releasing from one another.

4. The assembly (100) of any preceding claim, wherein the mounting support (120) has a first side (121) intended to face the vehicle exterior for receiving the vehicle component (110) and a second side (122) intended to face the vehicle interior for providing access to the actuating end (180).

5. The assembly (100) of any preceding claim, wherein the mounting support (120) includes attaching means (125) for permanent attachment to the part (200) of the vehicle.

6. The assembly (100) of any preceding claim, wherein the vehicle component (110) has at least one vehicle component engaging element (116) cooperating with at least one corresponding mounting support engaging element (126) for releasable retention between them.

7. The assembly (100) of any of the claims 3-6, wherein the locking end (170) of the actuator (150) is capable of abutting an abutting member (115) of the vehicle component (110), in one specific angular position of the locking end (170) of the actuator (150) within the receiving body (130), for preventing the second displacement (d2) of the vehicle component (110).

8. The assembly (100) of claim 6 or 7, wherein at least a mounting support engaging element (126) is formed in the receiving body (130) for engaging a vehicle component engaging element (116), with this mounting support engaging element (126), preferably defining a first opening (135) for receiving the vehicle component engaging element (116).

9. The assembly (100) of any of the claims 3-8, wherein a second opening (137) is formed in a locking wall (136) of the receiving body (130), said second opening (137) being configured such that the locking end (170) of the actuator (150) is allowed to pass through in one specific angular position of the locking end (170) of the actuator (150) within the receiving body (130).

10. The assembly (100) of claim 9, wherein a locking wing (181) is provided in the actuator (150) for abutting at least one first rotation restraining member (139) formed in a first side (136a) of the locking wall (136) of the receiving body (130) whereby restraining a rotational movement of the actuator (150) within the receiving body (130).

11. The assembly (100) of claim 9 or 10, wherein a second side (136b) of the locking wall (136) of the receiving body (130) includes at least one second rotation restraining member (138) intended to abut the locking end (170) of the actuator (150) for restraining a rotational movement within the receiving body (130).

12. The assembly (100) of any the claims 3-11, wherein biasing means (190) are provided for biasing the actuator (150) against a sliding movement thereof within receiving body (130).

13. The assembly (100) of claim 12, wherein the biasing means comprise a compression spring (190) arranged to abut the locking end (170) of the actuator (150) and the second side (136b) of the locking wall (136) of the receiving body (130).

14. The assembly (100) of any of the claims 11-13, wherein a volume (113) is formed in the vehicle component (110) defined by a restraining surface (114) and intended for restraining a movement of the actuator (150) along the receiving body (130).

15. The assembly (100) of any preceding claim, wherein at least a third opening (127) is formed in the mounting support (120) for the passage of at least one cable therethrough.
